Europäisches Patentamt

European Patent Office

Office européen des brevets

(11) Publication number: **0 106 581**
**B1**

# EUROPEAN PATENT SPECIFICATION

(45) Date of publication of patent specification: **26.10.88**

(51) Int. Cl.⁴: **F 16 D 35/00, F 01 P 7/04**

(21) Application number: **83305685.6**

(22) Date of filing: **23.09.83**

(54) **Fluid coupling device with improved modulation capability.**

(30) Priority: **12.10.82 US 433937**

(43) Date of publication of application:
**25.04.84 Bulletin 84/17**

(45) Publication of the grant of the patent:
**26.10.88 Bulletin 88/43**

(84) Designated Contracting States:
**DE FR GB IT**

(56) References cited:
**EP-A-0 014 072**
**EP-A-0 078 651**
**WO-A-80/00181**
**FR-A-2 395 431**
**GB-A-2 104 627**
**GB-A-2 110 797**
**US-A-3 055 473**
**US-A-3 227 254**
**US-A-3 628 641**
**US-A-4 116 317**

(73) Proprietor: **EATON CORPORATION**
**100 Erieview Plaza**
**Cleveland Ohio 44114 (US)**

(72) Inventor: **Light, Gerald Marion**
**628 Lyon Lake**
**Marshall Michigan 49068 (US)**

(74) Representative: **Douglas, John Andrew**
**Eaton House Staines Road**
**Hounslow Middlesex TW4 5DX (GB)**

Courier Press, Leamington Spa, England.

## Description

### BACKGROUND OF THE DISCLOSURE

The present invention relates to fluid coupling devices, and more particularly, to fluid coupling devices of the type including modulating valving.

Although the present invention may be used advantageously in fluid coupling devices having many different configurations and applications, it is especially advantageous in a coupling device of the type used to drive a radiator cooling fan of an internal combustion engine, and will be described in connection therewith.

Fluid coupling devices of the viscous shear type have been popular for many years for driving engine cooling fans, primarily because their use results in a substantial saving of engine horsepower, when compared to a conventional shaft driven fan. The horsepower savings results from the fact that the viscous coupling operates in the engaged, full speed condition only when cooling is needed, and operates in a disengaged, relatively lower speed condition when little or no cooling is required.

In an effort to effect even greater savings of engine horsepower, those working in the art developed "modulating valving" for fluid couplings of the type to which the invention relates. See for example US-A-3,227,254, assigned to the assignee of the present invention. Briefly stated, modulating valving has effect of moving the fluid inlet opening radially outward as the temperature increases, to progressively increase the volume of fluid in the operating chamber of the device, as the ambient air temperature increases over a predetermined range.

However, in applying modulating valving to various sizes and configurations of fluid coupling devices, it has been found that frequently the use of modulating valving alone is not sufficient to achieve the desired fan speed vs. temperature relationship. Instead, fan speed (fluid coupling output speed) rises more rapidly with increasing temperature than is desirable.

### SUMMARY OF THE INVENTION

Accordingly, it is an object of the present invention to provide a fluid coupling device of the type including modulating valving, wherein the modulation characteristics can be attained in various sizes and configurations of coupling devices.

It is another object of the present invention to provide a fluid coupling device which achieves the above-stated object by means of a modification of some portion of the fluid coupling device, other than the modulating valving itself.

The above and other objects of the present invention are accomplished by the provision of an improved fluid coupling device of the known type including a first rotatable coupling assembly defining a fluid chamber, valve means disposed to separate the fluid chamber into an operating chamber and a reservoir chamber, and a second rotatable coupling member disposed in the operating chamber. The valve means is operable to control the flow of fluid between the reservoir chamber and the operating chamber and is of the type which is configured to provide modulating operation. The second coupling member defines a generally cylindrical outer surface including forward and rearward transverse surfaces. The forward surface and the adjacent wall surface of the first coupling assembly cooperate to define a viscous shear area, and the rearward surface and the adjacent wall surface of the first coupling assembly define a clearance. This type is known from the assignee's Fan Drive models, Series '240' or '220' intended mainly for lorries, trucks and other commercial vehicles, and forms the pre-characterizing part of Claim 1.

The invention is characterized in Claim 1, namely by the outer surface and the rearward surface cooperating to define an annular recess configured to provide a localized region having a substantially lower viscous shear rate than the shear rate in the clearance, to thereby reduce the rate of increase of viscous shear torque transmitted from the second coupling member to the first coupling assembly as fluid is communicated to the operating chamber.

In accordance with an optional aspect of the present invention in Claim 5, the forward transverse surface and the adjacent wall surface of the first coupling assembly each define a plurality of annular lands and grooves. Each set of lands has a nominal axial length, and at least one of the sets of lands includes a plurality of radially outer lands having an axial length less than the nominal axial length, to further reduce the rate of increase of viscous shear torque transmitted from the second coupling member to the first coupling assembly as fluid is communicated to the operating chamber. This option, and preferably those of Claims 6 and 7 combine with Claim 1 to improve still further the modulation characteristics given by the "modulation valving".

### BRIEF DESCRIPTION OF THE DRAWINGS

FIG. 1 is an axial cross section illustrating one-half of a known and typical fluid coupling device of the type which can utilize the present invention.

FIG. 2 is an enlarged, fragmentary view, similar to FIG. 1, illustrating one embodiment of the present invention.

FIG. 3 is a graph of fan output speed difference (rpm/5 degrees F.) versus ambient air temperature (degrees F) comparing the fan drive of FIG. 1 with and without the present invention.

### DESCRIPTION OF THE PREFERRED EMBODIMENT

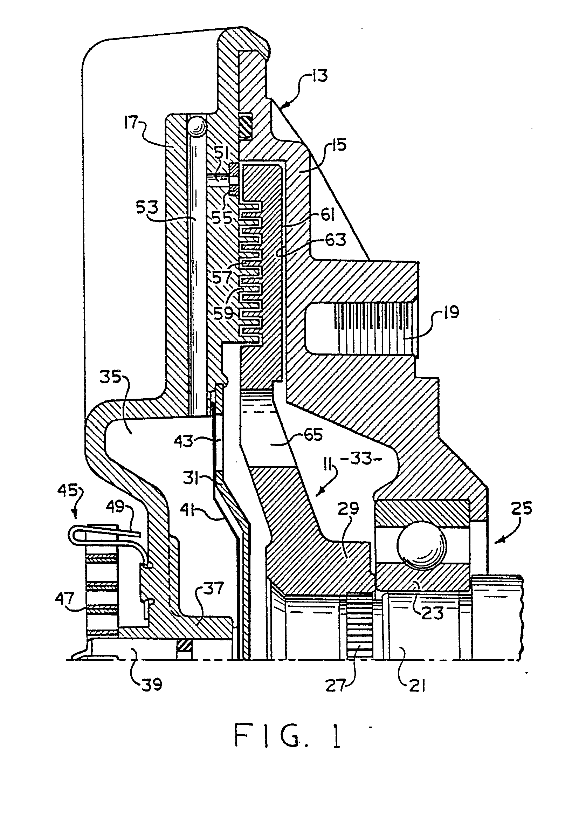

Referring now to the drawings, which are not intended to limit the invention, FIG. 1 illustrates one preferred form of a fluid coupling device of the type in which the present invention may be utilized. It should be understood that the structure of the invention is shown only in the enlarged view of FIG. 2, for ease of illustration. The fluid coupling device includes an input coupling member, generally designated 11, and an output coupling assembly, generally designated 13. The output coupling assembly 13 includes a cast metal housing member 15 and a cast metal cover member 17, the members 15 and 17 being secured together by a plurality of bolts (not shown). The fluid coupling device is adapted to be driven by a liquid cooled engine and, in turn, drives an automotive engine accessory, such as a radiator cooling fan. The fan (not shown) may be bolted to the housing member 15 by means of a plurality of threaded bores 19 formed in the member 15. It will be understood, however, that the use of the present invention is not limited to any particular fluid coupling device configuration or application, except as specifically noted hereinafter.

The fluid coupling device includes an input shaft 21 on which the input coupling member 11 is mounted. The input shaft 21 is rotatably driven, typically by means of a flange (not shown) which may be bolted to the flange of an engine water pump. The input shaft 21 functions as a support for the inner race 23 of a bearing set 25, which is seated on the inside diameter of the housing member 15. The forward end (left end in FIG. 1) of the input shaft 21 has an interference fit between a serrated portion 27 and an opening defined by a hub portion 29 of the input coupling member 11. As a result, rotation of the input shaft 21 causes rotation of the input coupling member 11.

The housing member 15 and the cover member 17 cooperate to define a fluid chamber which is separated, by means of a circular valve plate 31 into a fluid operating chamber 33 and a fluid reservoir chamber 35. Thus, it may be seen that the input coupling member 11 is disposed wholly within the fluid operating chamber 33.

The cover member 17 defines a generally cylindrical shaft support portion 37, and rotatably disposed within the portion 37 is a valve shaft 39 extending outwardly (to the left in FIG. 1) through the cover member 17. Attached to the inner end (right end in FIG. 1) of the valve shaft 39 is a valve arm 41, the general construction of which forms no part of the present invention, but which may be better understood by reference to US-A-3,055,473. Movement of the valve arm 41 controls the flow of fluid from the reservoir chamber 35 to the operating chamber 33, through a fill opening 43 formed in the valve plate 31.

Operatively associated with the outer end of the valve shaft 39 is a bimetal element, generally designated 45, which, in the subject embodiment, is formed in the shape of a helical 47. The bimetal element 45 includes a clip assembly 49 which maintains the outer end of the coil 47 fixed relative to the cover member 17. The manner in which the bimetal element 45 operates to control the movement of the valve arm 41 is well known in the art, is not an essential feature of the present invention, and will not be described further.

The cover member 17 defines an axial passage 51 in communication with the fluid operating chamber 33, and a radial passage 53 which provides fluid communication from the axial passage 51 to the fluid reservoir chamber 35. Disposed adjacent the axial passage 51 is a pumping element (wiper) 55, operable to engage the relatively rotating fluid in the operating chamber 33, to generate a localized region of relatively higher fluid pressure, and continually pump a small quantity of fluid back into the reservoir chamber 35, through the passages 51 and 53, as is well known in the art.

In the subject embodiment, the input coupling member 11 includes a forward surface which defines a plurality of annular lands 57. The adjacent surface of the housing member 17 forms a plurality of annular lands 59. The annular lands 57 and 59 are interdigitated to define a serpentine-shaped forward shear space therebetween. The input coupling member 11 includes a rearward surface 61 which cooperates with an adjacent surface 63 of the housing member 15 to define therebetween a clearance (typically referred to in the art as the "bottom end" clearance).

Referring still primarily to FIG. 1, a brief description will be given of the fluid flow path during filling of the conventional form of fluid coupling device of the type shown in FIG. 1. When the valve arm 41 moves to begin uncovering the fill opening 43, fluid flows from the reservoir chamber 35 into the operating chamber 33. The fluid entering the operating chamber 33 flows outwardly between the lands 57 and 59 to the radially outermost region surrounding the input member 11. The fluid in this region impacts the pumping element 55, thus creating a localized region of relatively higher pressure. A portion of this high pressure fluid flows through the passages 51 and 53 into the reservoir chamber 35, as described previously, and the remainder of the fluid is forced out around the input member 11 into the bottom end clearance.

As was mentioned in the background of the specification, the present invention is intended to be used with a fluid coupling device of the type including "modulating valving". Reference was made to US-A-3,227,254, which is incorporated herein by reference for its teaching of a typical prior art modulating valve arrangement. Thus, although it is a feature of the present invention that the fluid coupling device be of the type including modulating valving, the particular configuration and mode of operation of the modulating valving is not an essential feature of the invention, and will not be described further herein.

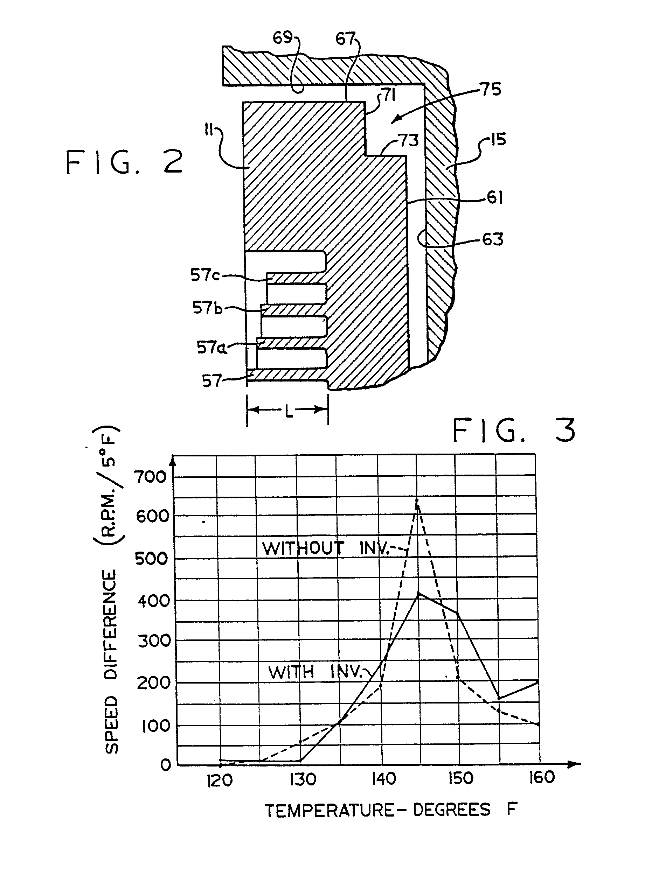

In attempting to apply modulating valving to several fluid coupling devices of the general design shown in FIG. 1, it was observed that the modulating characteristics were generally unsatisfactory, as will be described in greater detail subsequently in connection with the graph of FIG. 3. As is well known to those skilled in the art, previous attempts to obtain or modify modulation characteristics of a fluid coupling device have been centered around the valving, and controlling the rate at which fluid flows from the reservoir into the operating chamber.

It is one important aspect of the present invention to take a modulating type fluid coupling device and attempt to improve the modulation characteristics by modifying some portion of the fluid coupling device, other than the modulating valving. As is shown in FIG. 2, the input coupling member 11 defines a generally cylindrical outer surface 67, which is spaced apart from an internal cylindrical surface 69 defined by the housing member 15. This space is normally referred to as the "OD clearance".

Referring still to FIG. 2, the input coupling member of the present invention includes an annular transverse surface 71, which is oriented generally parallel to the rearward surface 61. In addition, the input coupling member 11 defines a cylindrical surface portion 73, which is generally concentric with the cylindrical outer surface 67. The surfaces 71 and 73 cooperate with the cylindrical surface 69 and with the adjacent surface 63 to define an annular recess 75. The use of various shapes and sizes of recesses and cutout portions from the input coupling member is known in the art. For example, US-A- 4,116,317, assigned to the assignee of the present invention, shows a standard "rear land and groove" fluid coupling device in which the input coupling member defines a frusto-conical surface portion to provide a coupling having lower disengaged output speed and reduced disengagement time during cold start-up. However, it is believed that, prior to the present invention, it was unknown to utilize an input coupling member having some sort of modified configuration, in order to improve the modulation characteristics of the coupling.

Reference will now be made to FIG. 3 which is a graph of fan output speed difference (rpm/5 degrees F) as a function of ambient air temperature (degrees F). In other words, FIG. 3 is a graph of the rate of increase of output speed for each five degree increase in temperature. For example, without the present invention (dashed line), the speed difference at 130 degrees is shown as 60 rpm, i.e., as the temperature increases from 125 degrees to 130 degrees, output speed increases 60 rpm. As one more example, with the invention (solid-line), at 155 degrees the speed difference is 160 rpm, i.e. as the temperature increases from 150 to 155 degrees, the output speed increases 160 rpm.

It should be noted that the fluid coupling device without the invention showed an increase of 640 rpm as the temperature increased from 140 degrees to 145 degrees, an average increase of about 128 rpm per degree. As is well known to those skilled in the art, such a steep increase in output speed can result in a condition known as "cycling", wherein fan speed increases so rapidly, and so much cooling occurs, that the ambient air temperature drops down, for example, to 130 degrees and the coupling "disengages". Then, because the coupling is disengaged, ambient air temperature increases, causing the coupling to engage, and the cycle continues to repeat itself, with the coupling alternating between the engaged and disengaged conditions. Because the coupling and fan generate substantially more noise in the engaged condition than in the disengaged condition, such cycling between the two conditions results in a noise condition which is more objectionable than if the coupling remained at a fairly constant speed. In addition, the coupling consumes a greater amount of engine horsepower when it is cycling than when it is operating at a fairly constant speed.

Referring now to the curve for the same fan drive, but with the present invention included, it may be seen the output speed difference is about 410 rpm/5 degrees F as the temperature increases from 140 degrees to 145 degrees. Thus, with the invention, the most rapid increase in fan speed is about 82 rpm per degree, vs. an increase of 128 rpm per degree without the invention, substantially reducing the chances of cycling occurring.

Referring again to FIG. 2, the mode of operation of the present invention is not well understood. However, it has been hypothesized that the annular recess 75 provides a localized region having a substantially lower viscous shear rate than the shear rate in the clearance defined by the surfaces 61 and 63. As is well known to those skilled in the art, shear rate of viscous fluid is inversely proportional to the film thickness, and therefore, because the axial thickness defined by the transverse surface 71 and adjacent surface 63 is approximately two to three times the thickness of the bottom end clearance, the shear rate in the annular recess 75 will be about one-third to one-half the shear rate in the bottom end clearance.

It is believed that without the present invention, fluid flows to the right in FIG. 2 through the OD clearance, and then flows radially inwardly through the bottom end clearance, such that the bottom end clearance becomes substantially filled with viscous fluid. However, because of the substantial difference in speed between the input member 11 and the output member 13, the fluid does not form a continuous film between surfaces 61 and 63 immediately, but instead, the fluid is being constantly thrown off the input member 11 by the higher centrifugal force of the input member 11. As the speed of the output member 13 gradually increases, a point is reached at which the difference between the speed of the input member 11 and the speed of the output member 13 is reduced sufficiently that the fluid begins to attach to the surface 61. At this point, the output speed of the output member 13 increases suddenly and rapidly, causing an increase in the centrifugal force acting on the fluid attached to the surface 63. This results in all of the fluid in the bottom end clearance becoming attached (i.e., forming a continuous fluid film) which, in turn, results in a large increase in fan speed as the fluid in the operating chamber 33 becomes more evenly distributed, both forward and rearward of the input member 11. With the fan drive of FIG. 1, and without the invention, it is believed that this point at which attachment began to occur was reached as the temperature approached 140 degrees.

By utilizing the present invention, it has been hypothesized that because of the lower shear rate within the annular recess 75, the fluid fills the recess 75 and attaches to the surface 71 and adjacent portion of surface 63, as the modulating valving introduces fluid into the operating chamber 33. With the fluid attached in the recess 75, it is further hypothesized that, as additional fluid is gradually introduced into the operating chamber 33, the attachment of fluid to the surface 61 gradually spreads, or extends, further inward radially. This results in more even filling of the shear space and bottom end clearance, on the forward and rearward sides of the input member 11 respectively, giving a more gradual rate of torque increase, and a resulting more gradual rate of fan speed increase.

In the course of the development of the present invention, it has been found that, when the fluid coupling is used to drive some relatively lighter (lower torque) fans, even the use of the annular recess 75 is not able to reduce enough for some applications the rate of increase of torque transmitted from the input member 11 to the output member 13 to obtain the desired modulation characteristic. For such applications of the fluid coupling, it is a preferred optional feature of the present invention to modify the radially outermost lands and grooves to thereby reduce the torque transmitting capability thereof. Referring still to FIG. 2, in conjunction with FIG. 1, it may be seen that most of the lands 57 defined by the input member 11 have a certain, nominal axial length L. In accordance with the invention, the input member 11 includes a land 57a which has an axial length which is somewhat less than the nominal axial length L of the adjacent land 57. Similarly, radially outwardly is a land 57b having less axial length than the land 57a, and finally, further radially outward is a land 57c having less axial length than the land 57b. It is not an essential feature that the lands 57a, 57b, and 57c each be different length, however, the particular arrangement has been provided to compensate for the fact that a given shear area transmits a greater amount of torque as it is further from the rotational axis of the coupling.

## Claims

1. A fluid coupling device of the type including a first rotatable coupling assembly (13) defining a fluid chamber therein, valve means (31, 41, 43) associated with said first rotatable coupling assembly and disposed to separate said fluid chamber into a fluid operating chamber (33) and a fluid reservoir chamber (35), a second rotatable coupling member (11) disposed in said fluid operating chamber and being rotatable relative to said first coupling assembly, said valve means being operable to control the flow of fluid between said reservoir chamber and said operating chamber, and including control means (45, 47, 39) associated with said valve means to effect operation thereof in response to variations in a predetermined temperature condition, said valve means being of the type which is configured to provide modulating operation of the fluid coupling device, said second coupling member defining a generally cylindrical outer surface (67) and including forward and rearward (61) transverse surfaces, said forward surface and the adjacent wall surface of said first coupling assembly cooperating to define a viscous shear area (57-59), and a first recess in which is disposed a pumping element (55) operable to pump fluid from said fluid operating chamber to said fluid reservoir chamber, said rearward surface (61) and the adjacent wall surface (63) of said first coupling assembly comprising a pair of generally parallel surfaces defining a clearance, characterized by:

said outer surface (67) and said rearward surface (63) cooperating to define a second annular recess (75), said second annular recess being defined by an annular transverse surface portion (71), generally parallel to said rearward surface, and by a cylindrical surface portion (73), generally concentric with said cylindrical outer surface, said second annular recess (75) having an axial extent which is a minor portion of the axial extent of said cylindrical outer surface of said second coupling member, said second annular recess providing a localized region having a substantially lower viscous shear rate than the shear rate in said clearance, to thereby reduce the rate of increase of viscous shear torque transmitted from said second coupling member to said first coupling assembly as fluid is communicated to said fluid operating chamber.

2. The fluid coupling device as claimed in claim 1 wherein said valve means includes a plate-like member (31) defining a fluid inlet (43) disposed to permit flow of fluid from said reservoir chamber into said operating chamber, and a movable valve member (41) operably associated with said control means and with said fluid inlet to control the flow of fluid through said inlet in response to variations in said temperature condition.

3. The fluid coupling device as claimed in claim 1 wherein said annular recess is defined by an annular transverse surface portion (71), generally parallel to said rearward surface, and by a cylindrical surface portion (73), generally concentric with said cylindrical outer surface.

4. The fluid coupling device as claimed in claim 3 wherein said annular transverse surface portion is spaced from said adjacent wall surface of said first coupling assembly an axial distance equal to at least about twice the axial dimension of said clearance.

5. The fluid coupling device as claimed in any of claims 1-4 characterized in that:-

said forward transverse surface and the adjacent wall surface of said first coupling assembly each defines a plurality of interdigitated annular lands (57, 59) and grooves, each set of lands having a nominal axial length (L), and at least one of said sets of lands including a plurality of radially outer lands (57a, 57b, 57c) having an axial length less than said nominal axial length, to thereby reduce the rate of increase of viscous shear torque transmitted from said second coupling member to said first coupling assembly as fluid is communicated to said fluid operating chamber.

6. The fluid coupling device as claimed in claim 5 wherein said plurality of said outer lands having an axial length less than nominal comprises said lands (59) defined by said second coupling member (17).

7. The fluid coupling device as claimed in claim 5 or 6 wherein, among said plurality of radially outer lands, each land has less axial length than the adjacent land in the radially inward direction.

**Patentansprüche**

1. Fluidkupplungseinrichtung mit einer eine Fluidkammer bildenden ersten drehbaren Kupplungsanordnung (13), einer der ersten drehbaren Kupplungsanordnung zugeordneten Ventilanordnung (31, 41, 43), welche die Fluidkammer in eine Fluidarbeitskammer (33) und eine Fluidspeicherkammer (35) unterteilt und betätigbar ist, um den Strom von Fluid zwischen der Speicherkammer und der Arbeitskammer zu steuern, einem in der Fluidarbeitskammer angeordneten und gegenüber der ersten Kupplungsanordnung drehbaren zweiten Kupplungsglied (11) sowie einer der Ventilanordnung zugeordneten Steuereinrichtung (45, 47, 39), die ein Arbeiten der Ventilanordnung aufgrund von Änderungen eines vorbestimmten Temperaturzustandes bewirkt, wobei die Ventilanordnung so ausgebildet ist, daß sie für einen Modulationsbetrieb der Fluidkupplungseinrichtung sorgt, wobei das zweite Kupplungsglied eine im wesentlichen zylindrische Außenfläche (67) bildet und querverlaufende Vorder und Rückseiten (61) aufweist, wobei die Vorderseite und die benachbarte Wandfläche der ersten Kupplungsanordnung zusammen einen Viskositätsscherbereich (57-59) und eine erste Ausnehmung bilden, in der ein Pumpelement (55) angeordnet ist, mittels dessen Fluid von der Fluidarbeitskammer zu der Fluidspeicherkammer gepumpt werden kann, und wobei die Rückseite (61) und die benachbarte Wandfläche (63) der ersten Kupplungsanordnung zwei im wesentlichen parallele Oberflächen aufweisen, die einen Freiraum begrenzen, dadurch gekennzeichnet, daß: die Außenfläche (67) und die Rückseite (63) zusammen eine zweite ringförmige Ausnehmung (75) bilden, die von einem ringförmigen, querverlaufenden, zu der Rückseite im wesentlichen parallelen Oberflächenteil (71) und von einem zu der zylindrischen Außenfläche im wesentlichen konzentrischen, zylindrischen Oberflächenteil (73) begrenzt ist und die eine axiale Ausdehnung hat, die ein kleiner Teil der axialen Ausdehnung der zylindrischen Außenfläche des zweiten Kupplungsgliedes ist, wobei die zweite ringförmige Ausnehmung (75) einen lokalisierten Bereich mit einer wesentlich niedrigeren Viskositätsscherrate als der Scherrate in dem Freiraum bildet, um dadurch die Steigerungsrate des von dem zweiten Kupplungsglied auf die erste Kupplungsanordnung übertragenen Viskositätsscherdrehmoments beim Überführen von Fluid zu der Fluidarbeitskammer zu vermindern.

2. Fluidkupplungseinrichtung nach Anspruch 1, wobei die Ventilanordnung ein plattenartiges Bauteil (31), das einen Fluideinlaß (43) bildet, der derart angeordnet ist, daß Fluid von der Speicherkammer in die Arbeitskammer strömen kann, und ein bewegbares Ventilglied (41) aufweist, das der Steuereinrichtung und dem Fluideinlaß derart funktionsmäßig zugeordnet ist, daß es den Fluidstrom durch den Einlaß in Abhängigkeit von Änderungen des Temperaturzustandes steuert.

3. Fluidkupplungseinrichtung nach Anspruch 1, wobei die ringförmige Ausnehmung von einem zu der Rückseite im wesentlichen parallelen ringförmigen, querverlaufenden Oberflächenteil (71) und von einem zu der zylindrischen Außenfläche im wesentlichen konzentrischen, zylindrischen Oberflächenteil (73) begrenzt ist.

4. Fluidkupplungseinrichtung nach Anspruch 3, wobei der ringförmige, querverlaufende Oberflächenteil von der benachbarten Wandfläche der ersten Kupplungsanordnung einen Axialabstand hat, der mindestens gleich etwa dem Zweifachen der Axialabmessung des Freiraumes ist.

5. Fluidkupplungseinrichtung nach einem der Ansprüche 1 bis 4, dadurch gekennzeichnet, daß: die querverlaufende Vorderseite und die benachbarte Wandfläche der esten kupplungsanordnung jeweils eine Mehrzahl von ineinandergreifenden ringförmigen Stegen (57, 59) und Nuten bilden, wobei jede Gruppe von stegen eine axiale Nennlänge (L) hat und wobei mindestens eine der Gruppen von Stegen mehrere radial außen liegende Stege (57a, 57b, 57c) umfaßt, deren axiale Länge kleiner als die axiale Nennlänge ist, um dadurch die Steigerungsrate des von dem zweiten Kupplungsglied auf die erste Kupplungsanordung übertragenen Viskositätsscherdrehmoments beim Überführen von Fluid zu der Fluidarbeitskammer zu vermindern.

6. Fluidkupplungseinrichtung nach Anspruch 5, wobei die mehreren Außenstege mit einer kleineren axialen Länge als der Nennlänge die von dem zweiten Kupplungsglied (17) gebildeten Stege (59) umfassen.

7. Fluidkupplungseinrichtung nach Anspruch 5 oder 6, wobei unter den mehreren radial außen liegenden Stegen jeder Steg eine gegere axiale Länge als der in radial einwärts weisender Richtung benachbarte Steg hat.

**Revendications**

1. Un coupleur hydraulique du type comprenant un premier ensemble rotatif d'accouplement (13) délimitant à l'intérieur une chambre à liquide, un système à clapets (31, 41, 43) associé audit premier ensemble rotatif d'accouplement et disposé de manière à diviser ladite chambre à liquide en un compartiment du liquide actif (33) et un compartiment réservoir de liquide (35), un deuxième élément d'accouplement rotatif (11) disposé à l'intérieur dudit compartiment du liquide actif et pouvant tourner par rapport audit premier ensemble d'accouplement, ledit système à clapets pouvant être manoeuvré pour régler l'écoulement du liquide entre ledit compartiment réservoir et ledit compartiment actif, et comprenant également des éléments de commande (45, 47, 39) associés audit système à clapets pour assurer le fonctionnement de celui-ci en réponse à des variations survenant dans des conditions de température prédéterminées, ledit système à clapets étant du type structuré pour obtenir un effet de modulation du coupleur hydraulique, ledit deuxième élément d'accouplement définissant une surface extérieure (67) de forme générale cylindrique entourant une surface transversale avant et une surface transversale arrière (61), ladite surface avant et la surface de la paroi adjacente dudit premier ensemble d'accouplement définissant conjointement une zone de cisaillement visqueux (57, 59) et un premier évidement dans lequel est disposé un élément de pompage (55) agissant pour pomper du liquide dudit compartiment du liquide actif en le dirigeant vers ledit compartiment réservoir, ladite surface arrière (61) et la surface de paroi adjacente (63) dudit premier ensemble d'accouplement comprenant une paire de surfaces de forme générale parallèles délimitant un intervalle, caractérisé par le fait que ladite surface extérieure (67) et ladite surface arrière (63) délimitent conjointement un deuxième évidement annulaire (75), ledit deuxième évidement étant délimité en outre par une partie de surface transversale annulaire (71) d'orientation générale parallèle à ladite surface arrière et par une partie de surface cylindrique (73) de forme générale concentrique avec ladite surface cylindrique extérieure, ledit deuxième évidement annulaire (75) s'étendant axialement sur une faible partie de la largeur axiale de ladite surface cylindrique extérieure dudit deuxième élément d'accouplement, ledit deuxième évidement annulaire constituant une région localisée caractérisée par un coefficient de cisaillement visqueux substantiellement plus faible que celui qui caractérise ledit jeu-intervalle, afin de réduire ainsi la vitesse d'accroissement du couple de cisaillement visqueux transmis dudit deuxième élément d'accouplement audit premier ensemble d'accouplement au fur et à mesure du passage du liquide dans ledit ompartiment du liquide actif.

2. Coupleur hydraulique selon la revendication 1, caractérisé par le fait que ledit système à clapets comprend un élément de clapet ayant la forme d'un disque (31) définissant un orifice d'admission du liquide (43) disposé de manière à permettre l'écoulement du liquide depuis ledit compartiment réservoir dans ledit compartiment actif, et un élément clapet (41) associé fonctionnellement avec lesdits éléments de commande et avec ledit orifice d'admission du liquide pour régler l'écoulement du liquide à travers ledit orifice en réponse aux variations desdites conditions de température.

3. Coupleur hydraulique selon la revendication 1, dans lequel ledit évidement annulaire est délimité par une partie annulaire (71) de ladite surface transversale, d'orientation générale parallèle à ladite surface arrière, et par une partie de surface cylindrique (73), concentrique dans, son ensemble avec ladite surface cylindrique extérieure.

4. Coupleur hydraulique selon la revendication 2, caractérisé par le fait

que ladite partie annulaire de la surface transversale se trouve, par rapport à ladite surface de paroi adjacente dudit premier ensemble d'accouplement, à une distance axiale égale au moins à près du double de l'étendue axiale dudit jeu-intervalle.

5. Coupleur hydraulique selon l'une quelconque des revendications de 1 à 4, caractérisé par le fait

que ladite surface transversale avant et la surface de paroi adjacente dudit premier ensemble d'accouplement définissent chacune un certain nombre de filets annulaires imbriqués entre eux (57, 59) et de rainures, chaque ensemble de saillies ayant une longueur axiale nominale (L), et l'un au moins desdits ensembles de saillies comprend un certain nombre de saillies se trouvant à l'extérieur dans le sens radial (57a, 57b, 57c) ayant une longueur axiale inférieure à ladite longueur axiale nominale, afin de réduire ainsi la vitesse d'accroissement du couple de cisaillement visqueux transmis dudit deuxième élément d'accouplement audit premier ensemble d'accouplement au fur et à mesure du passage du liquide dans ledit compartiment du liquide actif.

6. Coupler hydraulic selon la revendication 5, caractérisé par le fait

que ledit certain nombre desdites saillies ayant une longueur axiale inférieure à la longueur nominale comprend des saillies (59) définies par ladite partie couvercle (17), du premier ensemble d'accouplement 13.

7. Coupleur hydraulique selon la revendication 5 ou 6 caractérisé par le fait

que dans le. nombre desdites saillies extérieures dans le sens radial chacune de celles-ci a une longueur axiale inférieure à celle de la saillie adjacente qui se trouve à l'intérieur.

F I G. 1

FIG. 2

FIG. 3